# EUROPEAN PATENT SPECIFICATION

(11) **EP 4 144 811 B1**
(45) Date of publication and mention of the grant of the patent: **21.10.2026**
(21) Application number: 21795624.2
(22) Date of filing: 22.03.2021
(51) Int. Cl.: C09J 7/38, C09J 11/06, C09J 201/00, C09J 133/06

(54) **ADHESIVE SHEET**
KLEBEFOLIE
FEUILLE ADHÉSIVE

(30) Priority: 01.05.2020 JP 2020081451
(43) Date of publication of application: 08.03.2023
(73) Proprietor: Nitto Denko Corporation, Ibaraki-shi, Osaka 567-8680 (JP)
(72) Inventor: NAGATA, Mizuho, Ibaraki-shi, Osaka 567-8680 (JP); TACHIKAWA, Yu, Ibaraki-shi, Osaka 567-8680 (JP); TAKAHASHI, Tomokazu, Ibaraki-shi, Osaka 567-8680 (JP); HONDA, Satoshi, Ibaraki-shi, Osaka 567-8680 (JP)
(74) Representative: Müller-Boré & Partner Patentanwälte PartG mbB
(86) International application number: PCT/JP2021/011611
(87) International publication number: WO 2021/220662

(56) References cited:
- EP-A1- 4 083 155
- WO-A1-2008/133104
- JP-A- 2010 084 047
- JP-A- 2019 134 038
- US-A1- 2016 160 089

## Description

### Technical Field

The present invention relates to a pressure-sensitive adhesive sheet.

### Background Art

When various members typified by an electronic part are processed, the following has been generally performed. Each of the members is temporarily fixed to a support with a pressure-sensitive adhesive sheet, and after the processing, the processed member is peeled from the support. In, for example, Patent Literature 1, there is a description of a method including: processing a substrate (member to be processed) under a state in which the substrate is temporarily fixed to a support via an adhesive layer and a separation layer; breaking the separation layer through laser light irradiation after the processing to peel the substrate from the support together with the adhesive layer; and then removing the adhesive layer from the substrate.

PTL 2 discloses a pressure-sensitive adhesive sheet comprising a pressure-sensitive adhesive layer containing a photopolymerization initiator. The pressure sensitive layer is used for the production of a semiconductor When the pressure-sensitive adhesive sheet is irradiated with UV light it is easily peeled from the semiconductor.

### Citation List

### Patent Literature

[PTL 1] JP 5875850 B2
[PTL2] US2016160089A1 1

### Summary of Invention

### Technical Problem

However, the above-mentioned method involves a problem in terms of production cost because the method requires a step of removing the adhesive layer from the member, followed by the washing of the bonded surface of the member. In addition, the method involves a problem in that high-output laser light irradiation causes damage to the member.

The present invention has been made to solve the problems of the related art, and an object of the present invention is to provide a pressure-sensitive adhesive sheet that can temporarily fix an adherend in a peelable manner, the pressure-sensitive adhesive sheet being free from requiring high-output laser light irradiation at the time of the peeling of the adherend and being capable of eliminating the need for a step of washing the adherend after the peeling.

### Solution to Problem

According to one embodiment of the present invention, there is provided a pressure-sensitive adhesive sheet, including a pressure-sensitive adhesive layer containing a UV absorber and a photopolymerization initiator, wherein the UV absorber is a benzotriazole-based UV absorber and the content of the UV absorber is from 1 part by weight to 20 parts by weight with respect to 100 parts by weight of the base polymer in the pressure-sensitive adhesive layer, wherein the pressure-sensitive adhesive sheet has a transmittance of 60% or less for light having a wavelength of 355 nm, wherein an initial pressure-sensitive adhesive strength A at 23°C immediately after the pressure-sensitive adhesive sheet of the present invention is bonded to a stainless-steel plate is from 0.5 N/20 mm to 10 N/20 mm, wherein the pressure-sensitive adhesive layer is a layer having an indentation elastic modulus at 23°C of 25 MPa or more after irradiation with UV light having an integrated light quantity of 300 mJ/cm².

In one embodiment, the pressure-sensitive adhesive layer is formed of an active energy ray-curable pressure-sensitive adhesive.

In one embodiment, a molecular weight of a compound forming the UV absorber is 1,000 or less.

In one embodiment, a pressure-sensitive adhesive strength B at 23°C after the pressure-sensitive adhesive sheet is bonded to a stainless-steel plate and irradiated with UV light having an integrated light quantity of 300 mJ/cm² is 0.2 N/20 mm or less.

In one embodiment, a reduction ratio of a pressure-sensitive adhesive strength B at 23°C after the pressure-sensitive adhesive sheet is bonded to a stainless-steel plate and irradiated with UV light having an integrated light quantity of 300 mJ/cm² to an initial pressure-sensitive adhesive strength A at 23°C immediately after the pressure-sensitive adhesive sheet is bonded to the stainless-steel plate is 90% or more.

### Advantageous Effects of Invention

According to the present invention, the pressure-sensitive adhesive sheet that can temporarily fix an adherend in a peelable manner, the pressure-sensitive adhesive sheet being free from requiring high-output laser light irradiation at the time of the peeling of the adherend and being capable of eliminating the need for a step of washing the adherend after the peeling, can be provided. In addition, the pressure-sensitive adhesive sheet of the present invention expresses its peelability with low-output laser light, and besides, can express the peelability without decomposition of the pressure-sensitive adhesive layer, and hence the contamination of the adherend can be prevented.

### Brief Description of Drawings

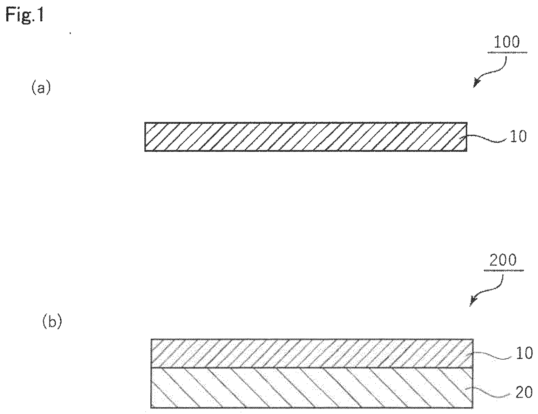

FIG. **1(a)** is a schematic sectional view of a pressure-sensitive adhesive sheet according to one embodiment of the present invention, and FIG. **1(b)** is a schematic sectional view of a pressure-sensitive adhesive sheet according to another embodiment of the present invention.

### Description of Embodiments

### A. Outline of Pressure-sensitive Adhesive Sheet

FIG. **1(a)** is a schematic sectional view of a pressure-sensitive adhesive sheet according to one embodiment of the present invention. A pressure-sensitive adhesive sheet **100** according to this embodiment includes a pressure-sensitive adhesive layer **10.** The pressure-sensitive adhesive layer **10** contains a UV absorber and/or a photopolymerization initiator. FIG. **1(b)** is a schematic sectional view of a pressure-sensitive adhesive sheet according to another embodiment of the present invention. A pressure-sensitive adhesive sheet **200** according to this embodiment further includes a base material **20,** and the pressure-sensitive adhesive layer **10** is arranged on at least one side of the base material **20.** In the pressure-sensitive adhesive sheet of the present invention, a release liner may be arranged outside the pressure-sensitive adhesive layer for the purpose of protecting the pressure-sensitive adhesive surface of the sheet until the sheet is subjected to use, though the liner is not shown. In addition, the pressure-sensitive adhesive sheet may further include any appropriate other layer as long as the effects of the present invention are obtained. In one embodiment, as illustrated in FIG. **1(a)****,** the pressure-sensitive adhesive sheet of the present invention includes only one pressure-sensitive adhesive layer. In another embodiment, as illustrated in FIG. **1(b)****,** the pressure-sensitive adhesive sheet of the present invention includes the base material and the pressure-sensitive adhesive layer, and the pressure-sensitive adhesive layer is arranged on the base material directly (i.e., without via any other layer). In the present invention, as described later, an adherend can be satisfactorily peeled by a reduction in pressure-sensitive adhesive strength of the pressure-sensitive adhesive layer and the occurrence of strain along with an increase in elastic modulus, and hence the pressure-sensitive adhesive sheet can be formed without arrangement of a layer except the pressure-sensitive adhesive layer for separating the adherend from the pressure-sensitive adhesive sheet (so-called separation layer).

In the present invention, the pressure-sensitive adhesive layer contains the UV absorber and the photopolymerization initiator, and hence the adherend can be peeled by laser light irradiation. More specifically, when the pressure-sensitive adhesive layer is irradiated with laser light, the UV absorber or the photopolymerization initiator is heated to cause strain in the pressure-sensitive adhesive layer, with the result that the peelability is expressed in a portion irradiated with the laser light. According to the present invention, strain can be caused in the pressure-sensitive adhesive layer in a minute range as described above. Because of this, even when a small adherend is processed, the adherend can be satisfactorily peeled. Through use of such pressure-sensitive adhesive sheet, the washing of the adherend to be performed after the peeling can be omitted. In addition, even when a small adherend that needs to be peeled and a small adherend that does not need to be peeled are temporarily fixed so as to be adjacent to each other, only the small adherend that needs to be peeled can be peeled, and unnecessary separation of the small adherend that does not need to be peeled can be prevented.

The pressure-sensitive adhesive layer is preferably formed of an active energy ray-curable pressure-sensitive adhesive. The irradiation of the pressure-sensitive adhesive sheet containing the active energy ray-curable pressure-sensitive adhesive with an active energy ray reduces the pressure-sensitive adhesive strength of the entirety of the pressure-sensitive adhesive layer. When the laser light irradiation is performed as described above after the reduction in pressure-sensitive adhesive strength by the irradiation of the entirety of the pressure-sensitive adhesive layer of the pressure-sensitive adhesive sheet having bonded thereto an adherend with the active energy ray, an adhesive residue after the peeling of the adherend can be prevented. The use of such pressure-sensitive adhesive sheet can omit the washing of the adherend to be performed after the peeling. In addition, the formation of the pressure-sensitive adhesive layer containing the active energy ray-curable pressure-sensitive adhesive can reduce a laser output at the time of the peeling. The pressure-sensitive adhesive sheet of the present invention expresses its peelability with low-output laser light, and hence the use of the pressure-sensitive adhesive sheet can reduce damage to the adherend at the time of the peeling to prevent the breakage of the adherend. In addition, the peelability can be expressed with laser light at such an output as not to cause the decomposition (pyrolysis) of the pressure-sensitive adhesive layer itself, and hence the contamination of the adherend by a decomposition product of the pressure-sensitive adhesive layer can be prevented. Examples of the active energy ray include a gamma ray, UV light, visible light, an infrared ray (heat ray), a radio wave, an alpha ray, a beta ray, an electron beam, a plasma flow, an ionizing ray, and a particle beam. Of those, UV light is preferred.

The transmittance of the pressure-sensitive adhesive sheet of the present invention for light having a wavelength of 355 nm is 60% or less. In the present invention, the laser output at the time of the peeling can be reduced by reducing the light transmittance. The pressure-sensitive adhesive sheet of the present invention expresses the peelability with low-output laser light, and hence the use of the pressure-sensitive adhesive sheet can reduce damage to the adherend at the time of the peeling to prevent the breakage of the adherend. The transmittance of the pressure-sensitive adhesive sheet of the present invention for light having a wavelength of 355 nm is preferably 50% or less, more preferably 40% or less, still more preferably 30% or less. When the light transmittance falls within such ranges, the above-mentioned effect becomes more significant. The light transmittance of the pressure-sensitive adhesive sheet is a light transmittance in the thickness direction of the pressure-sensitive adhesive sheet, and is a light transmittance to be measured for all the layers for forming the pressure-sensitive adhesive sheet. In the present invention, the transmittance of the pressure-sensitive adhesive sheet for light having a wavelength of 355 nm may be controlled by adjusting the content of the UV absorber to be incorporated into the pressure-sensitive adhesive layer. In addition, the transmittance of the pressure-sensitive adhesive sheet for light having a wavelength of 355 nm may also be controlled by the configuration of a base polymer and the photopolymerization initiator forming the pressure-sensitive adhesive layer. For example, the transmittance of the pressure-sensitive adhesive sheet for light having a wavelength of 355 nm may be controlled by the kind, amount, and the like of the photopolymerization initiator in the pressure-sensitive adhesive layer, in particular, compatibility between the photopolymerization initiator and the base polymer.

The visible light transmittance of the pressure-sensitive adhesive sheet of the present invention is preferably 50% or more, more preferably 60% or more, still more preferably 70% or more. When the visible light transmittance falls within such ranges, there can be obtained such a pressure-sensitive adhesive sheet that when an adherend is peeled by laser light irradiation, the adherend serving as a peeling object can be satisfactorily viewed through the pressure-sensitive adhesive sheet. Although the visible light transmittance of the pressure-sensitive adhesive sheet is preferably as high as possible, its upper limit is, for example, 95% (preferably 100%).

The haze value of the pressure-sensitive adhesive sheet of the present invention is preferably 70% or less, more preferably 65% or less. When the haze value falls within such ranges, there can be obtained such a pressure-sensitive adhesive sheet that when an adherend is peeled by laser light irradiation, the adherend serving as a peeling object can be satisfactorily viewed through the pressure-sensitive adhesive sheet. Although the haze value of the pressure-sensitive adhesive sheet is preferably as low as possible, its lower limit is, for example, 0.1%.

An initial pressure-sensitive adhesive strength A at 23°C immediately after the pressure-sensitive adhesive sheet of the present invention is bonded to a stainless-steel plate is from 0.5 N/20 mm to 10 N/20 mm. When the initial pressure-sensitive adhesive strength A falls within such ranges, a pressure-sensitive adhesive sheet that can satisfactorily hold an adherend can be obtained. The pressure-sensitive adhesive strength is measured in conformity with JIS Z 0237:2000. Specifically, the measurement is performed by: reciprocating a 2-kilogram roller once to bond the pressure-sensitive adhesive sheet to the stainless-steel plate (arithmetic average surface roughness Ra: 50±25 nm); leaving the resultant to stand under 23°C for 30 minutes; and then peeling the pressure-sensitive adhesive sheet under the conditions of a peel angle of 180° and a peel rate (tensile rate) of 300 mm/min. Although the pressure-sensitive adhesive strength of the pressure-sensitive adhesive layer is changed by active energy ray irradiation and laser light irradiation, the term "initial pressure-sensitive adhesive strength" as used herein means a pressure-sensitive adhesive strength before the active energy ray irradiation and the laser light irradiation.

In one embodiment, a pressure-sensitive adhesive strength B (hereinafter also referred to as "post-curing pressure-sensitive adhesive strength B") at 23°C after the pressure-sensitive adhesive sheet is bonded to a stainless-steel plate and irradiated with UV light having an integrated light quantity of 300 mJ/cm² is preferably 0.2 N/20 mm or less, more preferably from 0.01 N/20 mm to 0.2 N/20 mm, still more preferably from 0.02 N/20 mm to 0.15 N/20 mm. When the pressure-sensitive adhesive strength B falls within such ranges, a pressure-sensitive adhesive sheet having a reduced amount of an adhesive residue can be obtained. The UV irradiation is performed by, for example, irradiating the pressure-sensitive adhesive layer with UV light from a high-pressure mercury lamp (characteristic wavelength: 365 nm, integrated light quantity: 300 mJ/cm²) through use of a UV irradiation apparatus (manufactured by Nitto Seiki Co., Ltd., product name: "UM-810").

The reduction ratio of the post-curing pressure-sensitive adhesive strength B to the initial pressure-sensitive adhesive strength A is preferably 90% or more, more preferably 95% or more. When the reduction ratio falls within such ranges, a pressure-sensitive adhesive sheet excellent in peelability can be obtained. The reduction ratio (%) may be determined by the expression: (initial pressure-sensitive adhesive strength A - post-curing pressure-sensitive adhesive strength B)/initial pressure-sensitive adhesive strength A × 100.

The thickness of the pressure-sensitive adhesive sheet is preferably from 1 µm to 300 µm, more preferably from 5 µm to 200 µm.

### B. Pressure-sensitive Adhesive Layer

The thickness of the pressure-sensitive adhesive layer is preferably 20 µm or less. When the thickness falls within such range, there can be obtained a pressure-sensitive adhesive sheet that can further reduce a laser output at the time of the peeling of an adherend, and hence excellently expresses its peelability. The thickness of the pressure-sensitive adhesive layer is more preferably 10 µm or less, still more preferably 8 µm or less, still more preferably from 1 µm to 8 µm. When the thickness falls within such ranges, the above-mentioned effect becomes significant.

The pressure-sensitive adhesive layer is a layer having an indentation elastic modulus at 23°C of 25 MPa or more after irradiation with UV light having an integrated light quantity of 300 mJ/cm². When the pressure-sensitive adhesive sheet includes the pressure-sensitive adhesive layer that has such indentation elastic modulus after UV light irradiation, strain is caused in the pressure-sensitive adhesive layer by laser light irradiation, and as a result, the adherend can be satisfactorily peeled. In addition, the contamination of the adherend at the time of peeling can be prevented. The indentation elastic modulus of the pressure-sensitive adhesive layer after irradiation with UV light having an integrated light quantity of 300 mJ/cm² is more preferably 30 MPa or more, still more preferably 40 MPa or more, particularly preferably 50 MPa or more. The upper limit of the indentation elastic modulus of the pressure-sensitive adhesive layer after irradiation with UV light having an integrated light quantity of 300 mJ/cm² is, for example, 500 MPa (preferably 300 MPa). The indentation elastic modulus may be measured at an indentation speed of 10 nm/s and an indentation depth of 100 nm by a single indentation method at 23°C.

As described above, the pressure-sensitive adhesive layer contains the UV absorber and the photopolymerization initiator. The pressure-sensitive adhesive layer is preferably formed of the active energy ray-curable pressure-sensitive adhesive. The active energy ray-curable pressure-sensitive adhesive may contain the UV absorber and/or the photopolymerization initiator.

(UV Absorber) The UV absorber is a benzotriazole-based UV absorber.

Examples of the benzotriazole-based UV absorber (benzotriazole-based compound) include 2-(2-hydroxy-5-tert-butylphenyl) -2H-benzotriazole (product name: "TINUVIN PS", manufactured by BASF SE), an ester compound of benzenepropanoic acid and 3-(2H-benzotriazol-2-yl)-5-(1,1-dimethylethyl)-4-hydroxy (C7-9 side chain and linear alkyl) (product name: "TINUVIN 384-2", manufactured by BASF SE), a mixture of octyl 3-[3-tert-butyl-4-hydroxy-5-(5-chloro-2H-benzotriazol-2-yl)phenyl] propionate and 2-ethylhexyl-3- [3-tert-butyl-4-hydroxy-5-(5-chloro-2H-benzotriazol-2-yl)phenyl] propionate (product name: "TINUVIN 109", manufactured by BASF SE), 2-(2H-benzotriazol-2-yl) -4, 6-bis (1-methyl-1-phenylethyl)phenol (product name: "TINUVIN 900", manufactured by BASF SE), 2-(2H-benzotriazol-2-yl)-6-(1-methyl-1-phenylethyl)-4-(1,1,3,3-tetramethylbutyl) phenol (product name: "TINUVIN 928", manufactured by BASF SE), a reaction product of methyl 3-(3-(2H-benzotriazol-2-yl)-5-tert-butyl-4-hydroxyphenyl) propionate/polyethylene glycol 300 (product name: "TINUVIN 1130", manufactured by BASF SE), 2-(2H-benzotriazol-2-yl)-p-cresol (product name: "TINUVIN P", manufactured by BASF SE), 2-(2H-benzotriazol-2-yl)-4,6-bis(1-methyl-1-phenylethyl)phenol (product name: "TINUVIN 234", manufactured by BASF SE), 2-[5-chloro-2H-benzotriazol-2-yl]-4-methyl-6-(tert-butyl)phenol (product name: "TINUVIN 326", manufactured by BASF SE), 2- (2H-benzotriazol-2-yl)-4,6-di-tert-pentylphenol (product name: "TINUVIN 328", manufactured by BASF SE), 2-(2H-benzotriazol-2-yl)-4-(1,1,3,3-tetramethylbutyl)phenol (product name: "TINUVIN 329", manufactured by BASF SE), 2,2'-methylenebis[6-(2H-benzotriazol-2-yl)-4-(1,1,3,3-tetramethylbutyl)phenol] (product name: "TINUVIN 360", manufactured by BASF SE), a reaction product of methyl 3-(3-(2H-benzotriazol-2-yl)-5-tert-butyl-4-hydroxyphenyl) propionate and polyethylene glycol 300 (product name: "TINUVIN 213", manufactured by BASF SE), 2-(2H-benzotriazol-2-yl)-6-dodecyl-4-methylphenol (product name: "TINUVIN 571", manufactured by BASF SE), 2-[2-hydroxy-3-(3,4,5,6-tetrahydrophthalimido-methyl)-5-methylphenyl]benzotriazole (product name: "Sumisorb 250", manufactured by Sumitomo Chemical Co., Ltd.), 2-(3-tert-butyl-2-hydroxy-5-methylphenyl)-5-chloro-2H-benzotriazole (product name: "SEESORB 703", manufactured by Shipro Kasei Kaisha, Ltd.), 2-(2H-benzotriazol-2-yl)-4-methyl-6-(3,4,5,6-tetrahydrophthalimidylmethyl)phenol (product name: "SEESORB 706", manufactured by Shipro Kasei Kaisha, Ltd.), 2-(4-benzoyloxy-2-hydroxyphenyl)-5-chloro-2H-benzotriazole (product name: "SEESORB 7012BA", manufactured by Shipro Kasei Kaisha, Ltd.), 2-tert-butyl-6-(5-chloro-2H-benzotriazol-2-yl)-4-methylphenol (product name: "KEMISORB 73", manufactured by Chemipro Kasei Kaisha, Ltd.), 2,2'-methylenebis[6-(2H-benzotriazol-2-yl)-4-tert-octylphenol] (product name: "ADK STAB LA-31", manufactured by ADEKA Corporation), 2-(2H-benzotriazol-2-yl)-p-cellulose (product name: "ADK STAB LA-32", manufactured by ADEKA Corporation), and 2-(5-chloro-2H-benzotriazol-2-yl)-6-tert-butyl-4-methylphenol (product name: "ADK STAB LA-36", manufactured by ADEKA Corporation).

The molecular weight of the compound forming the UV absorber is preferably 1,000 or less, more preferably 800 or less, still more preferably 600 or less. The UV absorber having a molecular weight in the above-mentioned ranges is excellent in compatibility with the base polymer. Because of this, when such UV absorber is used, strain is caused only in a portion irradiated with a laser in the laser light irradiation, and hence the adherend can be peeled with significantly low laser energy. As a result, the pyrolysis of the pressure-sensitive adhesive layer can be prevented. When such pressure-sensitive adhesive layer is formed, a pressure-sensitive adhesive sheet that is less liable to contaminate the adherend can be obtained. The lower limit of the molecular weight of the compound forming the UV absorber is, for example, 100.

The maximum absorption wavelength of the UV absorber is preferably from 300 nm to 450 nm, more preferably from 320 nm to 400 nm, still more preferably from 330 nm to 380 nm. A difference between the maximum absorption wavelength of the UV absorber and the maximum absorption wavelength of the photopolymerization initiator is preferably 10 nm or more, more preferably 25 nm or more.

The content of the UV absorber is from 1 part by weight to 20 parts by weight with respect to 100 parts by weight of the base polymer in the pressure-sensitive adhesive layer. When the content falls within such ranges, there can be obtained such a pressure-sensitive adhesive sheet that when the pressure-sensitive adhesive strength of the entirety of its pressure-sensitive adhesive layer is satisfactorily reduced by active energy ray irradiation, the curing of the pressure-sensitive adhesive layer satisfactorily progresses, and satisfactory peelability is exhibited by laser light irradiation.

### (Photopolymerization Initiator)

Any appropriate initiator may be used as the photopolymerization initiator. Examples of the photopolymerization initiator include: α-ketol-based compounds, such as 4-(2-hydroxyethoxy)phenyl (2-hydroxy-2-propyl)ketone, α-hydroxy-α,α'-dimethylacetophenone, 2-methyl-2-hydroxypropiophenone, and 1-hydroxycyclohexyl phenyl ketone; acetophenone-based compounds, such as methoxyacetophenone, 2,2-dimethoxy-2-phenylacetophenone, 2,2-diethoxyacetophenone, and 2-methyl-1-[4-(methylthio)-phenyl]-2-morpholinopropane-1; benzoin ether-based compounds, such as benzoin ethyl ether, benzoin isopropyl ether, and anisoin methyl ether; ketal-based compounds such as benzyl dimethyl ketal; aromatic sulfonyl chloride-based compounds such as 2-naphthalenesulfonyl chloride; photoactive oxime-based compounds, such as 1-phenone-1,1-propanedione-2-(o-ethoxycarbonyl)oxime; benzophenone-based compounds, such as benzophenone, benzoylbenzoic acid, and 3,3'-dimethyl-4-methoxybenzophenone; thioxanthone-based compounds, such as thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, and 2,4-diisopropylthioxanthone; camphorquinone; halogenated ketones; acylphosphinoxides; and acylphosphonates. The usage amount of the photopolymerization initiator may be set to any appropriate amount.

In one embodiment, a photopolymerization initiator having a maximum absorption wavelength in the range of 400 nm or less (preferably 380 nm or less, more preferably 340 nm or less) is used. The use of such photopolymerization initiator can provide such a pressure-sensitive adhesive sheet that when the pressure-sensitive adhesive strength of the entirety of its pressure-sensitive adhesive layer is reduced by active energy ray irradiation, the curing reaction of the pressure-sensitive adhesive of the layer preferably occurs, and hence an adhesive residue is particularly reduced. In addition, a pressure-sensitive adhesive sheet that exhibits satisfactory peelability by laser light irradiation can be obtained.

The content of the photopolymerization initiator is preferably from 1 part by weight to 30 parts by weight, more preferably from 2 parts by weight to 20 parts by weight, still more preferably from 3 parts by weight to 15 parts by weight with respect to 100 parts by weight of the base polymer in the pressure-sensitive adhesive layer. When the content falls within such ranges, there can be obtained such a pressure-sensitive adhesive sheet that when the pressure-sensitive adhesive strength of the entirety of its pressure-sensitive adhesive layer is satisfactorily reduced by active energy ray irradiation, the curing of the pressure-sensitive adhesive layer satisfactorily progresses, the strain amount of the pressure-sensitive adhesive layer by laser light irradiation is large, and satisfactory peelability is exhibited.

A commercially available product may be used as the photopolymerization initiator. Examples of the photopolymerization initiator having a maximum absorption wavelength in the range of 400 nm or less include products available under the product names "IRGACURE 127", "IRGACURE 369", "IRGACURE 369E", "IRGACURE 379", "IRGACURE 379EG", "IRGACURE 819", "IRGACURE TOP", "IRGACURE 784", and "IRGACURE OXE01" from BASF SE.

### (Active Energy Ray-curable Pressure-sensitive Adhesive)

In one embodiment, an active energy ray-curable pressure-sensitive adhesive (A1), which contains a base polymer serving as a parent agent and an active energy ray-reactive compound (monomer or oligomer) that can be bonded to the base polymer, is used as the active energy ray-curable pressure-sensitive adhesive. In another embodiment, an active energy ray-curable pressure-sensitive adhesive (A2) containing an active energy ray-reactive polymer as the base polymer is used. The base polymer preferably has a functional group that can react with a photopolymerization initiator. Examples of the functional group include a hydroxyl group and a carboxyl group.

Examples of the base polymer to be used in the pressure-sensitive adhesive (A1) include: rubber-based polymers, such as a natural rubber, a polyisobutylene rubber, a styrenebutadiene rubber, a styrene-isoprene-styrene block copolymer rubber, a reclaimed rubber, a butyl rubber, a polyisobutylene rubber, and a nitrile rubber (NBR); silicone-based polymers; and acrylic polymers. Those polymers may be used alone or in combination thereof. Of those, an acrylic polymer is preferred.

Examples of the acrylic polymer include: homopolymers or copolymers of hydrocarbon group-containing (meth)acrylic acid esters, such as a (meth)acrylic acid alkyl ester, a (meth)acrylic acid cycloalkyl ester, and a (meth)acrylic acid aryl ester; and copolymers of the hydrocarbon group-containing (meth)acrylic acid esters and other copolymerizable monomers. Examples of the (meth)acrylic acid alkyl ester include (meth)acrylic acid methyl ester, ethyl ester, propyl ester, isopropyl ester, butyl ester, isobutyl ester, s-butyl ester, t-butyl ester, pentyl ester, isopentyl ester, hexyl ester, heptyl ester, octyl ester, 2-ethylhexyl ester, isooctyl ester, nonyl ester, decyl ester, isodecyl ester, undecyl ester, dodecyl ester, that is, lauryl ester, tridecyl ester, tetradecyl ester, hexadecyl ester, octadecyl ester, and eicosyl ester. Examples of the (meth)acrylic acid cycloalkyl ester include (meth)acrylic acid cyclopentyl ester and cyclohexyl ester. Examples of the (meth)acrylic acid aryl ester include phenyl (meth) acrylate and benzyl (meth)acrylate. The content of a constituent unit derived from the hydrocarbon group-containing (meth)acrylic acid ester is preferably 40 parts by weight or more, more preferably 60 parts by weight or more with respect to 100 parts by weight of the base polymer.

Examples of the other copolymerizable monomer include functional group-containing monomers, such as a carboxy group-containing monomer, an acid anhydride monomer, a hydroxy group-containing monomer, a glycidyl group-containing monomer, a sulfonic acid group-containing monomer, a phosphoric acid group-containing monomer, acrylamide, and acrylonitrile. Examples of the carboxy group-containing monomer include acrylic acid, methacrylic acid, carboxyethyl (meth)acrylate, carboxypentyl (meth)acrylate, itaconic acid, maleic acid, fumaric acid, and crotonic acid. Examples of the acid anhydride monomer include maleic anhydride and itaconic anhydride. Examples of the hydroxy group-containing monomer include 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, and (4-hydroxymethylcyclohexyl)methyl (meth)acrylate. Examples of the glycidyl group-containing monomer include glycidyl (meth)acrylate and methylglycidyl (meth)acrylate. Examples of the sulfonic acid group-containing monomer include styrenesulfonic acid, allylsulfonic acid, 2-(meth)acrylamido-2-methylpropanesulfonic acid, (meth)acrylamidopropanesulfonic acid, sulfopropyl (meth)acrylate, and (meth)acryloyloxynaphthalenesulfonic acid. An example of the phosphoric acid group-containing monomer is 2-hydroxyethylacryloyl phosphate. An example of the acrylamide is N-acryloylmorpholine. Those monomers may be used alone or in combination thereof. The content of a constituent unit derived from the copolymerizable monomer is preferably 60 parts by weight or less, more preferably 40 parts by weight or less with respect to 100 parts by weight of the base polymer.

The acrylic polymer may contain a constituent unit derived from a polyfunctional monomer for forming a cross-linked structure in a polymer skeleton thereof. Examples of the polyfunctional monomer include hexanediol di(meth)acrylate, (poly)ethylene glycol di(meth)acrylate, (poly)propylene glycol di(meth)acrylate, neopentyl glycol di(meth)acrylate, pentaerythritol di(meth)acrylate, trimethylolpropane tri(meth)acrylate, pentaerythritol tri(meth)acrylate, dipentaerythritol hexa(meth)acrylate, epoxy (meth)acrylate (that is, polyglycidyl (meth)acrylate), polyester (meth)acrylate, and urethane (meth)acrylate. Those monomers may be used alone or in combination thereof. The content of the constituent unit derived from the polyfunctional monomer is preferably 40 parts by weight or less, more preferably 30 parts by weight or less with respect to 100 parts by weight of the base polymer.

The weight-average molecular weight of the acrylic polymer is preferably from 100,000 to 3,000,000, more preferably from 200,000 to 2,000,000. The weight-average molecular weight may be measured by GPC (solvent: THF).

The active energy ray-reactive compound that may be used in the pressure-sensitive adhesive (A1) is, for example, a photoreactive monomer or oligomer having a functional group having a polymerizable carbon-carbon multiple bond, such as an acryloyl group, a methacryloyl group, a vinyl group, an allyl group, or an acetylene group. Specific examples of the photoreactive monomer include: esterified products of (meth)acrylic acid and polyhydric alcohols, such as trimethylolpropane tri(meth)acrylate, tetramethylolmethane tetra(meth)acrylate, pentaerythritol tri(meth)acrylate, pentaerythritol tetra(meth)acrylate, dipentaerythritol monohydroxypenta(meth)acrylate, dipentaerythritol hexa(meth)acrylate, 1,4-butanediol di(meth)acrylate, 1,6-hexanediol di(meth)acrylate, and polyethylene glycol di(meth)acrylate; polyfunctional urethane (meth)acrylate; epoxy (meth)acrylate; and oligoester (meth)acrylates. In addition, a monomer, such as methacryloisocyanate, 2-methacryloyloxyethyl isocyanate (2-isocyanatoethyl methacrylate), or m-isopropenyl-α,α-dimethylbenzyl isocyanate, may be used. Specific examples of the photoreactive oligomer include dimers to pentamers of the above-mentioned monomers. The molecular weight of the photoreactive oligomer is preferably from 100 to 3,000.

In addition, a monomer, such as epoxidized butadiene, glycidyl methacrylate, acrylamide, or vinylsiloxane, or an oligomer formed of the monomer may be used as the active energy ray-reactive compound.

Further, a mixture of an organic salt such as an onium salt, and a compound having a plurality of heterocycles in a molecule thereof may be used as the active energy ray-reactive compound. When the mixture is irradiated with an active energy ray (e.g., UV light or an electron beam), the organic salt cleaves to produce an ion, and the ion serves as an initiation species to cause the ring-opening reaction of the heterocycles. Thus, a three-dimensional network structure can be formed. Examples of the organic salt include an iodonium salt, a phosphonium salt, an antimonium salt, a sulfonium salt, and a borate salt. Examples of the heterocycles in the compound having the plurality of heterocycles in a molecule thereof include oxirane, oxetane, oxolane, thiirane, and aziridine.

The content of the active energy ray-reactive compound in the pressure-sensitive adhesive (A1) is preferably from 0.1 part by weight to 500 parts by weight, more preferably from 5 parts by weight to 300 parts by weight, still more preferably from 40 parts by weight to 150 parts by weight with respect to 100 parts by weight of the base polymer.

The active energy ray-reactive polymer (base polymer) in the pressure-sensitive adhesive (A2) is, for example, a polymer having a functional group having a carbon-carbon multiple bond, such as an acryloyl group, a methacryloyl group, a vinyl group, an allyl group, or an acetylene group. Specific examples of the active energy ray-reactive polymer include: polymers formed of polyfunctional (meth)acrylates; photocationically polymerizable polymers; cinnamoyl group-containing polymers such as polyvinyl cinnamate; diazotized amino novolac resins; and polyacrylamide.

In one embodiment, there is used an active energy ray-reactive polymer formed by introducing an active energy ray-polymerizable carbon-carbon multiple bond into a side chain of the above-mentioned acrylic polymer, the main chain thereof, and/or a terminal of the main chain. An approach to introducing a radiation-polymerizable carbon-carbon double bond into the acrylic polymer is, for example, a method including: copolymerizing raw material monomers including a monomer having a predetermined functional group (first functional group) to provide the acrylic polymer; and then subjecting a compound having a predetermined functional group (second functional group) that can react with the first functional group to be bonded thereto and the radiation-polymerizable carbon-carbon double bond to a condensation reaction or an addition reaction with the acrylic polymer while maintaining the radiation polymerizability of the carbon-carbon double bond.

Examples of the combination of the first functional group and the second functional group include: a carboxy group and an epoxy group; an epoxy group and a carboxy group; a carboxy group and an aziridyl group; an aziridyl group and a carboxy group; a hydroxy group and an isocyanate group; and an isocyanate group and a hydroxy group. Of those combinations, the combination of a hydroxy group and an isocyanate group or the combination of an isocyanate group and a hydroxy group is preferred from the viewpoint of the ease with which a reaction between the groups is tracked. In addition, technical difficulty in producing a polymer having an isocyanate group having high reactivity is high, and hence a case in which the first functional group of the acrylic polymer side is a hydroxy group and the second functional group is an isocyanate group is more preferred from the viewpoint of the ease with which the acrylic polymer is produced or obtained. In this case, examples of an isocyanate compound having both of a radiation-polymerizable carbon-carbon double bond and an isocyanate group serving as the second functional group include methacryloyl isocyanate, 2-methacryloyloxyethyl isocyanate, and m-isopropenyl-α,α-dimethylbenzyl isocyanate. In addition, a polymer containing a constituent unit derived from the above-mentioned hydroxy group-containing monomer is preferred as the acrylic polymer having the first functional group, and a polymer containing a constituent unit derived from an ether-based compound, such as 2-hydroxyethyl vinyl ether, 4-hydroxybutyl vinyl ether, or diethylene glycol monovinyl ether, is also preferred.

The pressure-sensitive adhesive (A2) may further contain the active energy ray-reactive compound (monomer or oligomer).

The active energy ray-curable pressure-sensitive adhesive may contain the UV absorber and/or the photopolymerization initiator. The details of the UV absorber and the photopolymerization initiator to be used are as described above.

In one embodiment, the active energy ray-curable pressure-sensitive adhesive may contain a photosensitizer.

In one embodiment, the photosensitizer may be used in combination with the photopolymerization initiator. The photosensitizer can generate a radical from the photopolymerization initiator by transferring, to the photopolymerization initiator, energy obtained by the absorption of light by the photosensitizer itself, and hence can advance the polymerization of the pressure-sensitive adhesive layer with light having a long wavelength at which no absorption peak of the photopolymerization initiator itself is present. Accordingly, the incorporation of the photosensitizer can enlarge a difference between the absorption wavelength of the UV absorber and the wavelength at which the radical can be generated from the photopolymerization initiator. As a result, the photopolymerization of the pressure-sensitive adhesive layer and the peeling thereof by the UV absorber can be performed without affecting each other. In one embodiment, 2,2-dimethoxy-1,2-diphenylethan-1-one (e.g., a product available under the product name "IRGACURE 651" from BASF SE) serving as the photopolymerization initiator and the photosensitizer are used in combination. Examples of such photosensitizer include a product available under the product name "UVS-581" from Kawasaki Kasei Chemicals Ltd. and 9,10-diethoxyanthracene (e.g., a product available under the product name "UVS-1101" from Kawasaki Kasei Chemicals Ltd.).

Other examples of the photosensitizer include 9,10-dibutoxyanthracene (e.g., a product available under the product name "UVS-1331" from Kawasaki Kasei Chemicals Ltd.), 2-isopropylthioxanthone, benzophenone, a thioxanthone derivative, and 4,4'-bis(dimethylamino)benzophenone. Examples of the thioxanthone derivative include ethoxycarbonylthioxanthone and isopropylthioxanthone.

The content of the photosensitizer is preferably from 0.01 part by weight to 2 parts by weight, more preferably from 0.5 part by weight to 2 parts by weight with respect to 100 parts by weight of the base polymer.

The active energy ray-curable pressure-sensitive adhesive preferably contains a cross-linking agent. Examples of the cross-linking agent include an isocyanate-based cross-linking agent, an epoxy-based cross-linking agent, an oxazoline-based cross-linking agent, an aziridine-based cross-linking agent, a melamine-based cross-linking agent, a peroxide-based cross-linking agent, a urea-based cross-linking agent, a metal alkoxide-based cross-linking agent, a metal chelate-based cross-linking agent, a metal salt-based cross-linking agent, a carbodiimide-based cross-linking agent, and an amine-based cross-linking agent.

The content of the cross-linking agent is preferably from 0.5 part by weight to 10 parts by weight, more preferably from 1 part by weight to 8 parts by weight with respect to 100 parts by weight of the base polymer of the pressure-sensitive adhesive.

In one embodiment, an isocyanate-based cross-linking agent is preferably used. The isocyanate-based cross-linking agent is preferred because the agent can react with many kinds of functional groups. Specific examples of the isocyanate-based cross-linking agent include: lower aliphatic polyisocyanates, such as butylene diisocyanate and hexamethylene diisocyanate; alicyclic isocyanates, such as cyclopentylene diisocyanate, cyclohexylene diisocyanate, and isophorone diisocyanate; aromatic isocyanates, such as 2,4-tolylene diisocyanate, 4,4'-diphenylmethane diisocyanate, and xylylene diisocyanate; and isocyanate adducts, such as a trimethylolpropane/tolylene diisocyanate trimer adduct (manufactured by Nippon Polyurethane Industry Co., Ltd., product name: "CORONATE L"), a trimethylolpropane/hexamethylene diisocyanate trimer adduct (manufactured by Nippon Polyurethane Industry Co., Ltd., product name: "CORONATE HL"), and an isocyanurate form of hexamethylene diisocyanate (manufactured by Nippon Polyurethane Industry Co., Ltd., product name: "CORONATE HX"). Of those, a cross-linking agent having 3 or more isocyanate groups is preferably used.

The active energy ray-curable pressure-sensitive adhesive may further contain any appropriate additive as required. Examples of the additive include an active energy ray polymerization accelerator, a radical scavenger, a tackifier, a plasticizer (e.g., a trimellitate-based plasticizer or a pyromellitate-based plasticizer), a pigment, a dye, a filler, an age resistor, a conductive material, an antistatic agent, a UV absorber, a light stabilizer, a peeling modifier, a softener, a surfactant, a flame retardant, and an antioxidant.

### C. Base Material

The base material may include any appropriate resin. Examples of the resin include a polyolefin-based resin, such as a polyethylene-based resin, a polypropylene-based resin, a polybutene-based resin, or a polymethylpentene-based resin, a polyurethane-based resin, a polyester-based resin, a polyimide-based resin, a polyetherketone-based resin, a polystyrene-based resin, a polyvinyl chloride-based resin, a polyvinylidene chloride-based resin, a fluorine-based resin, a silicon-based resin, a cellulose-based resin, and an ionomer resin. Of those, a polyolefin-based resin is preferred.

The thickness of the base material is preferably from 2 µm to 300 µm, more preferably from 2 µm to 100 µm, still more preferably from 2 µm to 50 µm.

The transmittance of the base material for light having a wavelength of 355 nm is preferably 70% or more, more preferably 80% or more, still more preferably 90% or more, particularly preferably 95% or more. The upper limit of the total light transmittance of the base material is, for example, 98% (preferably 99%).

### D. Method of producing Pressure-sensitive Adhesive Sheet

The pressure-sensitive adhesive sheet may be produced by any appropriate method. The pressure-sensitive adhesive sheet may be obtained by, for example, applying the pressure-sensitive adhesive onto the base material or the release liner. Various methods, such as bar coater coating, air knife coating, gravure coating, gravure reverse coating, reverse roll coating, lip coating, die coating, dip coating, offset printing, flexographic printing, and screen printing, may each be adopted as a method for the application. In addition, for example, a method involving separately forming the pressure-sensitive adhesive layer on a release liner and then bonding the resultant to the base material may be adopted.

### E.Method of using Pressure-sensitive Adhesive Sheet

The pressure-sensitive adhesive sheet of the present invention may be used for temporarily fixing any appropriate member to be processed (e.g., an electronic part) at the time of the processing of the member to be processed. A method of using the pressure-sensitive adhesive sheet of the present invention is, for example, a usage method including: (i) bonding and fixing the member to be processed to the pressure-sensitive adhesive sheet; (ii) processing the member to be processed; (iii) irradiating the entirety of the pressure-sensitive adhesive layer of the pressure-sensitive adhesive sheet with an active energy ray (e.g., UV light) to reduce the pressure-sensitive adhesive strength of the pressure-sensitive adhesive sheet; and (iv) irradiating a site where the expression of peelability is desired with laser light to peel the member to be processed. According to the method, the member to be processed can be peeled by its free fall. In addition, when a plurality of members to be processed are temporarily fixed, only part of the members can be peeled. When the pressure-sensitive adhesive sheet of the present invention is used, the pressure-sensitive adhesive strength can be reduced to such an extent that an adherend freely falls, and hence even extremely small (e.g., 50-micrometer square) members to be processed can be peeled one by one separately.

### Examples

Now, the present invention is specifically described by way of Examples. However, the present invention is by no means limited to these Examples. Test and evaluation methods in Examples are as described below. In addition, the terms "part(s)" and "%" are by weight unless otherwise stated.

### (1) Transmittance for Light having Wavelength of 355 nm

A PET separator on one surface of a pressure-sensitive adhesive sheet was peeled, and the sheet was bonded to a large slide glass (manufactured by Matsunami Glass Ind., Ltd., product name: "S9111") with a hand roller, followed by measurement under a state in which a PET separator on the other surface was peeled. Specifically, a transmittance for light having a wavelength of 355 nm in the pressure-sensitive adhesive sheet itself on the large slide glass was measured with a spectrophotometer (product name: "SPECTROPHOTOMETER U-4100", manufactured by Hitachi High-Tech Science Corporation).

### (2) Haze Value

A large slide glass (manufactured by Matsunami Glass Ind., Ltd., product name: "S9111") was set so that incident light vertically entered the surface of the slide glass, followed by the measurement of its haze value with a haze meter (product name: "HAZE METER HM-150", manufactured by Murakami Color Research Laboratory Co., Ltd.). After that, a PET separator on one surface of a pressure-sensitive adhesive sheet was peeled, and the sheet was bonded to the large slide glass after the measurement of its haze value with a hand roller, followed by the measurement of a haze value again under a state in which a PET separator on the other surface was peeled. The haze value of the pressure-sensitive adhesive sheet was obtained by subtracting the haze value of only the slide glass from the resultant haze value.

### (3) Indentation Elastic Modulus

A PET separator on one surface of a pressure-sensitive adhesive sheet was peeled, and the sheet was bonded to a large slide glass (manufactured by Matsunami Glass Ind., Ltd., product name: "S9111") with a hand roller. UV light (specific wavelength: 365 nm, integrated light quantity: 350 mJ/cm²) of a high-pressure mercury lamp was applied from the slide glass surface side of the resultant sample to the entire surface thereof through use of a UV irradiation apparatus (manufactured by Nitto Seiki Co., Ltd., product name: "UM-810"). After that, a PET separator on the other surface was peeled to expose a pressure-sensitive adhesive layer, and an indentation elastic modulus was measured with TriboIndenter TI-950 manufactured by Hysitron, Inc. The measurement was performed at an indentation speed of 10 nm/s and an indentation depth of 100 nm by a single indentation method at 23°C.

### (4) Pressure-sensitive Adhesive Strength

A PET separator on one surface of a pressure-sensitive adhesive sheet was peeled, and PET (Lumirror S10 manufactured by Toray Industries, Inc.) having a thickness of 25 µm was bonded to the sheet. After that, a PET separator on the other surface was peeled, and the sheet was bonded to SUS304 by reciprocating a 2-kilogram roller once. Then, a pressure-sensitive adhesive strength was measured as an initial pressure-sensitive adhesive strength by a method (peel angle: 180°, peel rate (tensile rate): 300 mm/min, measurement temperature: 23°C) in conformity with JIS Z 0237:2000.

After the pressure-sensitive adhesive sheet was bonded to SUS304 by the same method, UV light (specific wavelength: 365 nm, integrated light quantity: 300 mJ/cm²) of a high-pressure mercury lamp was applied from the pressure-sensitive adhesive sheet side of the resultant sample to the entire surface thereof through use of a UV irradiation apparatus (manufactured by Nitto Seiki Co., Ltd., product name: "UM-810"). After that, a pressure-sensitive adhesive strength was similarly measured as a post-curing pressure-sensitive adhesive strength.

The reduction ratio of the pressure-sensitive adhesive strength was calculated by the expression: reduction ratio [%]=(initial pressure-sensitive adhesive strength - post-curing pressure-sensitive adhesive strength)/initial pressure-sensitive adhesive strength × 100.

### (5) Laser Peelability

A PET separator on one surface of a pressure-sensitive adhesive sheet was peeled, and the sheet was bonded to a large slide glass (manufactured by Matsunami Glass Ind., Ltd., product name: "S9111") with a hand roller. After that, a PET separator on the other surface was peeled, and a 100-micrometer square silicon chip was bonded to the pressure-sensitive adhesive surface of the sheet.

UV light (specific wavelength: 365 nm, integrated light quantity: 350 mJ/cm²) of a high-pressure mercury lamp was applied from the slide glass surface side of the resultant sample to the entire surface thereof through of a UV irradiation apparatus (manufactured by Nitto Seiki Co., Ltd., product name: "UM-810").

Laser light having a wavelength of 355 nm was applied from the large slide glass side of the sample only to a target member position (1 plus per chip) in an application area of 80 µmφ at an output of 0.2 W, 0.1 W, or 0.05 W, and a case in which the chip freely fell was regarded as a success (o), while a case in which the chip did not freely fall was regarded as a failure (×) .

In the case of free fall, the laser irradiation site was observed with a laser microscope from the pressure-sensitive adhesive layer side so that the form of the surface of the pressure-sensitive adhesive layer was observed. In Table 1, those in which the pressure-sensitive adhesive was decomposed by laser irradiation and the pressure-sensitive adhesive layer disappeared partially or entirely were shown as "recessed", and those in which no change was observed were shown as "smooth". In the case of the surface of the pressure-sensitive adhesive layer, the contamination of the adherend can be prevented. Meanwhile, the state in which the surface of the pressure-sensitive adhesive layer has a recessed shape is a state in which the pressure-sensitive adhesive layer itself is thermally decomposed, and in such state, there is a risk in that the adherend may be contaminated.

### [Production Example 1] Preparation of Acrylic Polymer I

100 Parts by weight of 2-methoxyethyl acrylate, 27 parts by weight of acryloylmorpholine, and 22 parts by weight of 2-hydroxyethyl acrylate were mixed to prepare a monomer composition.

Next, nitrogen was introduced into a reaction vessel including a nitrogen inlet tube, a temperature gauge, and a stirrer. Under a nitrogen atmosphere, 500 parts by weight of toluene, 149 parts by weight of the monomer composition, and 0.3 part by weight of benzoyl peroxide (BPO) were loaded into the vessel, and were stirred at 60°C for 5 hours. After that, the mixture was cooled to room temperature, and 24 parts by weight of 2-methacryloyloxyethyl isocyanate was added to, and caused to react with, the resultant copolymer to add an NCO group to a terminal OH group in a 2-hydroxyethyl acrylate side chain in the copolymer. Thus, an acrylic polymer solution I containing an acrylic polymer I having a carbon-carbon double bond at a terminal thereof was obtained.

### [Production Example 2] Preparation of Acrylic Polymer II

100 Parts by weight of butyl acrylate, 78 parts by weight of ethyl acrylate, and 40 parts by weight of hydroxyethyl acrylate were mixed to prepare a monomer composition.

Next, nitrogen was introduced into a reaction vessel including a nitrogen inlet tube, a temperature gauge, and a stirrer. Under a nitrogen atmosphere, 507 parts by weight of toluene, 218 parts by weight of the monomer composition, and 1.2 parts by weight of benzoyl peroxide (BPO) were loaded into the vessel, and were stirred at 60°C for 5 hours. After that, the mixture was cooled to room temperature, and 42.6 parts by weight of 2-methacryloyloxyethyl isocyanate was added to, and caused to react with, the resultant copolymer to add an NCO group to a terminal OH group in a 2-hydroxyethyl acrylate side chain in the copolymer. Thus, an acrylic polymer solution II containing an acrylic polymer II having a carbon-carbon double bond at a terminal thereof was obtained.

### [Production Example 3] Preparation of Acrylic Polymer III

90 Parts by weight of lauryl methacrylate and 10 parts by weight of 2-hydroxyethyl methacrylate were mixed to prepare a monomer composition.

Next, nitrogen was introduced into a reaction vessel including a nitrogen inlet tube, a temperature gauge, and a stirrer. Under a nitrogen atmosphere, 43 parts by weight of toluene, 100 parts by weight of the monomer composition, and 0.2 part by weight of azobisisobutyronitrile (AIBN) were loaded into the vessel, and were stirred at 60°C for 4 hours. After that, the mixture was cooled to room temperature, and 9 parts by weight of 2-methacryloyloxyethyl isocyanate was added to, and caused to react with, the resultant copolymer to add an NCO group to a terminal OH group in a 2-hydroxyethyl acrylate side chain in the copolymer. Thus, an acrylic polymer solution III containing an acrylic polymer III having a carbon-carbon double bond at a terminal thereof was obtained.

### [Production Example 4] Preparation of Acrylic Polymer IV

100 Parts by weight of 2-ethylhexyl acrylate, 25.5 parts by weight of acryloylmorpholine, and 18.5 parts by weight of hydroxyethyl acrylate were mixed to prepare a monomer composition.

Next, nitrogen was introduced into a reaction vessel including a nitrogen inlet tube, a temperature gauge, and a stirrer. Under a nitrogen atmosphere, 60 parts by weight of toluene, 144 parts by weight of the monomer composition, and 0.3 part by weight of benzoyl peroxide (BPO) were loaded into the vessel, and were stirred at 60°C for 4 hours. After that, the mixture was cooled to room temperature, and 12 parts by weight of 2-methacryloyloxyethyl isocyanate was added to, and caused to react with, the resultant copolymer to add an NCO group to a terminal OH group in a 2-hydroxyethyl acrylate side chain in the copolymer. Thus, an acrylic polymer solution IV containing an acrylic polymer IV having a carbon-carbon double bond at a terminal thereof was obtained.

### [Production Example 5] Preparation of Acrylic Polymer V

70 Parts by weight of ethyl acrylate, 30 parts by weight of 2-hydroxyethyl acrylate, 5 parts by weight of methacrylic acid methyl acrylate, and 4 parts by weight of hydroxyethyl acrylate were mixed to prepare a monomer composition.

Next, nitrogen was introduced into a reaction vessel including a nitrogen inlet tube, a temperature gauge, and a stirrer. Under a nitrogen atmosphere, 295 parts by weight of toluene, 109 parts by weight of the monomer composition, and 0.2 part by weight of benzoyl peroxide (BPO) were loaded into the vessel, and were stirred at 60°C for 4 hours to provide an acrylic polymer solution V containing an acrylic polymer V having a weight-average molecular weight of 500,000.

### [Example 1] (not according to the invention)

### (Preparation of Pressure-sensitive Adhesive)

3 Parts by weight of a cross-linking agent (manufactured by Nippon Polyurethane Industry Co., Ltd., product name: "CORONATE L") and 3 parts by weight of a photopolymerization initiator (manufactured by BASF SE, product name: "IRGACURE 369") were added to the acrylic polymer solution I containing 100 parts by weight of the acrylic polymer I to provide a pressure-sensitive adhesive (1).

### (Pressure-sensitive Adhesive Sheet)

The pressure-sensitive adhesive (1) was applied to the silicone-treated surface of a PET separator (thickness: 38 µm), and was then heated at 130°C for 2 minutes to form a pressure-sensitive adhesive layer having a thickness of 5 µm.

Another PET separator was bonded onto the pressure-sensitive adhesive layer with a hand roller to provide a pressure-sensitive adhesive sheet with separators.

The obtained pressure-sensitive adhesive sheet with separators was subjected to the above-mentioned evaluations. The results are shown in Table 1.

### [Example 2] (not according to the invention)

A pressure-sensitive adhesive sheet with separators was obtained in the same manner as in Example 1 except that the addition amount of the photopolymerization initiator (manufactured by BASF SE, product name: "IRGACURE 369") was set to 10 parts by weight. The obtained pressure-sensitive adhesive sheet with separators was subjected to the above-mentioned evaluations. The results are shown in Table 1.

### [Example 3] (not according to the invention)

### (Preparation of Pressure-sensitive Adhesive)

3 Parts by weight of a cross-linking agent (manufactured by Nippon Polyurethane Industry Co., Ltd., product name: "CORONATE L"), 3 parts by weight of a photopolymerization initiator (manufactured by BASF SE, product name: "IRGACURE 369"), and 5 parts by weight of a UV absorber (manufactured by Chemipro Kasei Kaisha, Ltd., product name: "KEMISORB 111", molecular weight: 244.2) were added to the acrylic polymer solution I containing 100 parts by weight of the acrylic polymer I to provide a pressure-sensitive adhesive (3).

### (Pressure-sensitive Adhesive Sheet)

The pressure-sensitive adhesive (3) was applied to the silicone-treated surface of a PET separator (thickness: 38 µm), and was then heated at 130°C for 2 minutes to form a pressure-sensitive adhesive layer having a thickness of 5 µm.

Another PET separator was bonded onto the pressure-sensitive adhesive layer with a hand roller to provide a pressure-sensitive adhesive sheet with separators.

The obtained pressure-sensitive adhesive sheet with separators was subjected to the above-mentioned evaluations. The results are shown in Table 1.

### [Example 4] (not according to the invention)

A pressure-sensitive adhesive sheet with separators was obtained in the same manner as in Example 3 except that the blending amount of the UV absorber (manufactured by Chemipro Kasei Kaisha, Ltd., product name: "KEMISORB 111", molecular weight: 244.2) was set to 20 parts by weight. The obtained pressure-sensitive adhesive sheet with separators was subjected to the above-mentioned evaluations. The results are shown in Table 1.

### [Example 5]

A pressure-sensitive adhesive sheet with separators was obtained in the same manner as in Example 3 except that 5 parts by weight of a UV absorber (manufactured by Chemipro Kasei Kaisha, Ltd., product name: "KEMISORB 71", molecular weight: 225.3) was used instead of 5 parts by weight of the UV absorber (manufactured by Chemipro Kasei Kaisha, Ltd., product name: "KEMISORB 111", molecular weight: 244.2). The obtained pressure-sensitive adhesive sheet with separators was subjected to the above-mentioned evaluations. The results are shown in Table 1.

### [Example 6]

A pressure-sensitive adhesive sheet with separators was obtained in the same manner as in Example 3 except that: 3 parts by weight of a photopolymerization initiator (manufactured by BASF SE, product name: "IRGACURE 907") was used instead of 3 parts by weight of the photopolymerization initiator (manufactured by BASF SE, product name: "IRGACURE 369"); and 5 parts by weight of a UV absorber (manufactured by BASF Japan Ltd., product name: "Tinuvin 405", molecular weight: 583.8) was used instead of 5 parts by weight of the UV absorber (manufactured by Chemipro Kasei Kaisha, Ltd., product name: "KEMISORB 111", molecular weight: 244.2). The obtained pressure-sensitive adhesive sheet with separators was subjected to the above-mentioned evaluations. The results are shown in Table 1.

### [Example 7]

A pressure-sensitive adhesive sheet with separators was obtained in the same manner as in Example 3 except that: 10 parts by weight of a photopolymerization initiator (manufactured by BASF SE, product name: "IRGACURE 907") was used instead of 3 parts by weight of the photopolymerization initiator (manufactured by BASF SE, product name: "IRGACURE 369"); and 5 parts by weight of a UV absorber (manufactured by BASF Japan Ltd., product name: "Tinuvin 405", molecular weight: 583.8) was used instead of 5 parts by weight of the UV absorber (manufactured by Chemipro Kasei Kaisha, Ltd., product name: "KEMISORB 111", molecular weight: 244.2). The obtained pressure-sensitive adhesive sheet with separators was subjected to the above-mentioned evaluations. The results are shown in Table 1.

### [Example 8]

A pressure-sensitive adhesive sheet with separators was obtained in the same manner as in Example 3 except that: 3 parts by weight of a photopolymerization initiator (manufactured by BASF SE, product name: "IRGACURE 127") was used instead of 3 parts by weight of the photopolymerization initiator (manufactured by BASF SE, product name: "IRGACURE 369"); and 5 parts by weight of a UV absorber (manufactured by BASF Japan Ltd., product name: "Tinuvin 405", molecular weight: 583.8) was used instead of 5 parts by weight of the UV absorber (manufactured by Chemipro Kasei Kaisha, Ltd., product name: "KEMISORB 111", molecular weight: 244.2). The obtained pressure-sensitive adhesive sheet with separators was subjected to the above-mentioned evaluations. The results are shown in Table 1.

### [Example 9]

A pressure-sensitive adhesive sheet with separators was obtained in the same manner as in Example 3 except that 5 parts by weight of a UV absorber (manufactured by BASF Japan Ltd., product name: "Tinuvin PS", molecular weight: 267.3) was used instead of 5 parts by weight of the UV absorber (manufactured by Chemipro Kasei Kaisha, Ltd., product name: "KEMISORB 111", molecular weight: 244.2). The obtained pressure-sensitive adhesive sheet with separators was subjected to the above-mentioned evaluations. The results are shown in Table 1.

### [Example 10]

A pressure-sensitive adhesive sheet with separators was obtained in the same manner as in Example 3 except that: the blending amount of the cross-linking agent (manufactured by Nippon Polyurethane Industry Co., Ltd., product name: "CORONATE L") was set to 0.5 part by weight; and 5 parts by weight of a UV absorber (manufactured by BASF Japan Ltd., product name: "Tinuvin PS", molecular weight: 267.3) was used instead of 5 parts by weight of the UV absorber (manufactured by Chemipro Kasei Kaisha, Ltd., product name: "KEMISORB 111", molecular weight: 244.2). The obtained pressure-sensitive adhesive sheet with separators was subjected to the above-mentioned evaluations. The results are shown in Table 1.

### [Example 11]

### (Preparation of Pressure-sensitive Adhesive)

3 Parts by weight of a cross-linking agent (manufactured by Nippon Polyurethane Industry Co., Ltd., product name: "CORONATE L"), 3 parts by weight of a photopolymerization initiator (manufactured by BASF SE, product name: "IRGACURE 369"), and 5 parts by weight of a UV absorber (manufactured by BASF SE, product name: "Tinuvin PS", molecular weight: 267.3) were added to the acrylic polymer solution II containing 100 parts by weight of the acrylic polymer II to provide a pressure-sensitive adhesive (11).

### (Pressure-sensitive Adhesive Sheet)

The pressure-sensitive adhesive (11) was applied to the silicone-treated surface of a PET separator (thickness: 38 µm), and was then heated at 130°C for 2 minutes to form a pressure-sensitive adhesive layer having a thickness of 5 µm.

Another PET separator was bonded onto the pressure-sensitive adhesive layer with a hand roller to provide a pressure-sensitive adhesive sheet with separators.

The obtained pressure-sensitive adhesive sheet with separators was subjected to the above-mentioned evaluations. The results are shown in Table 1.

### [Example 12]

### (Preparation of Pressure-sensitive Adhesive)

5 Parts by weight of a cross-linking agent (manufactured by Nippon Polyurethane Industry Co., Ltd., product name: "CORONATE L"), 3 parts by weight of a photopolymerization initiator (manufactured by BASF SE, product name: "IRGACURE 369"), and 5 parts by weight of a UV absorber (manufactured by BASF SE, product name: "Tinuvin PS", molecular weight: 267.3) were added to the acrylic polymer solution III containing 100 parts by weight of the acrylic polymer III to provide a pressure-sensitive adhesive (12).

### (Pressure-sensitive Adhesive Sheet)

The pressure-sensitive adhesive (12) was applied to the silicone-treated surface of a PET separator (thickness: 38 µm), and was then heated at 130°C for 2 minutes to form a pressure-sensitive adhesive layer having a thickness of 5 µm.

Another PET separator was bonded onto the pressure-sensitive adhesive layer with a hand roller to provide a pressure-sensitive adhesive sheet with separators.

The obtained pressure-sensitive adhesive sheet with separators was subjected to the above-mentioned evaluations. The results are shown in Table 1.

### [Example 13]

A pressure-sensitive adhesive sheet with separators was obtained in the same manner as in Example 12 except that 5 parts by weight of a cross-linking agent (manufactured by Nippon Polyurethane Industry Co., Ltd., product name: "CORONATE HX") was used instead of 5 parts by weight of the cross-linking agent (manufactured by Nippon Polyurethane Industry Co., Ltd., product name: "CORONATE L"). The obtained pressure-sensitive adhesive sheet with separators was subjected to the above-mentioned evaluations. The results are shown in Table 1.

### [Comparative Example 1]

A pressure-sensitive adhesive sheet with separators was obtained in the same manner as in Example 12 except that no UV absorber was added. The obtained pressure-sensitive adhesive sheet with separators was subjected to the above-mentioned evaluations. The results are shown in Table 1.

### [Comparative Example 2]

### (Preparation of Pressure-sensitive Adhesive)

5 Parts by weight of a cross-linking agent (manufactured by Nippon Polyurethane Industry Co., Ltd., product name: "CORONATE L"), 10 parts by weight of a photopolymerization initiator (manufactured by BASF SE, product name: "IRGACURE 651"), and 5 parts by weight of a UV absorber (manufactured by BASF Japan Ltd., product name: "Tinuvin 405", molecular weight: 583.8) were added to the acrylic polymer solution I containing 100 parts by weight of the acrylic polymer I to provide a pressure-sensitive adhesive (C2).

### (Pressure-sensitive Adhesive Sheet)

The pressure-sensitive adhesive (C2) was applied to the silicone-treated surface of a PET separator (thickness: 38 µm), and was then heated at 130°C for 2 minutes to form a pressure-sensitive adhesive layer having a thickness of 5 µm.

Another PET separator was bonded onto the pressure-sensitive adhesive layer with a hand roller to provide a pressure-sensitive adhesive sheet with separators.

The obtained pressure-sensitive adhesive sheet with separators was subjected to the above-mentioned evaluations. The results are shown in Table 1.

### [Comparative Example 3]

### (Preparation of Pressure-sensitive Adhesive)

3 Parts by weight of a cross-linking agent (manufactured by Nippon Polyurethane Industry Co., Ltd., product name: "CORONATE L"), 3 parts by weight of a photopolymerization initiator (manufactured by BASF SE, product name: "IRGACURE 369"), and 5 parts by weight of a UV absorber (manufactured by BASF Japan Ltd., product name: "Tinuvin 477", molecular weight: 583.8) were added to the acrylic polymer solution IV containing 100 parts by weight of the acrylic polymer IV to provide a pressure-sensitive adhesive (C3).

### (Pressure-sensitive Adhesive Sheet)

The pressure-sensitive adhesive (C3) was applied to the silicone-treated surface of a PET separator (thickness: 38 µm), and was then heated at 130°C for 2 minutes to form a pressure-sensitive adhesive layer having a thickness of 5 µm.

Another PET separator was bonded onto the pressure-sensitive adhesive layer with a hand roller to provide a pressure-sensitive adhesive sheet with separators.

The obtained pressure-sensitive adhesive sheet with separators was subjected to the above-mentioned evaluations. The results are shown in Table 1.

### [Comparative Example 4]

A pressure-sensitive adhesive sheet with separators was obtained in the same manner as in Comparative Example 3 except that 5 parts by weight of a UV absorber (manufactured by BASF Japan Ltd., product name: "Tinuvin PS", molecular weight: 267.3) was used instead of 5 parts by weight of the UV absorber (manufactured by BASF Japan Ltd., product name: "Tinuvin 477", molecular weight: 583.8). The obtained pressure-sensitive adhesive sheet with separators was subjected to the above-mentioned evaluations. The results are shown in Table 1.

### [Comparative Example 5]

### (Preparation of Pressure-sensitive Adhesive)

4 Parts by weight of a cross-linking agent (manufactured by Nippon Polyurethane Industry Co., Ltd., product name: "CORONATE L") and 20 parts by weight of a UV absorber (manufactured by BASF Japan Ltd., product name: "Tinuvin 477", molecular weight: 583.8) were added to the acrylic polymer solution V containing 100 parts by weight of the acrylic polymer V to provide a pressure-sensitive adhesive (C5).

### (Pressure-sensitive Adhesive Sheet)

The pressure-sensitive adhesive (C5) was applied to the silicone-treated surface of a PET separator (thickness: 38 µm), and was then heated at 130°C for 2 minutes to form a pressure-sensitive adhesive layer having a thickness of 5 µm.

Another PET separator was bonded onto the pressure-sensitive adhesive layer with a hand roller to provide a pressure-sensitive adhesive sheet with separators.

The obtained pressure-sensitive adhesive sheet with separators was subjected to the above-mentioned evaluations. The results are shown in Table 1.

**Table 1**

| | Polymer of pressure-sensitive adhesive layer | Cross-linking agent | | Photopolymerization initiator | | UV absorber | | Thickness of press ure-sensitive adhesive layer | 355 nm transmittance | Haze value | Indentation elastic modulus | Pressure-sensitive adhesive strength | | | Laser peelability | | | | | |
|---|---|---|---|---|---|---|---|---|---|---|---|---|---|---|---|---|---|---|---|---|
| | | Kind | Content (part (s) by weight) | Kind | Content (part ( s) by weight ) | Kind | Content (part(s) by weight) | | % | % | MPa | Initial [N/ 20 mm] | After UV [N /2 0 mm ] | Reduction ratio [%] | 0.2 W | | 0.1 W | | 0.05 W | |
| Example 1 | I | C/ L | 3 | Irg 369 | 3 | - | - | 5 µm | 52.9 | 0. 3 | 70.3 | 4.5 | 0. 03 | 99.4 | ○ | Smooth | × | - | × | - |
| Example 2 | I | C/ L | 3 | Irg 369 | 10 | | | 5 µm | 42.3 | 0. 3 | 42.5 | 4.3 | 0. 16 | 96.3 | ○ | Smooth | × | | × | |
| Example 3 | I | C/ L | 3 | Irg 369 | 3 | KEMI SORB 111 | 5 | 5 µm | 24.9 | 0. 4 | 31.3 | 5.1 | 0. 08 | 98.4 | ○ | Recessed | ○ | Smooth | × | - |
| Example 4 | I | C/ L | 3 | Irg 369 | 3 | KEMI SORB 111 | 20 | 5 µm | 0.9 | 0. 4 | 29.1 | 6.4 | 0.10 | 98.4 | ○ | Recessed | ○ | Smooth | × | - |
| Example 5 | I | C/ L | 3 | Irg 369 | 3 | KEMI SORB 71 | 5 | 5 µm | 3.5 | 0. 7 | 189.1 | 5.3 | 0.03 | 99.4 | ○ | Recessed | ○ | Smooth | × | - |
| Example 6 | I | C/ L | 3 | Irg 907 | 3 | Tnuv in 405 | 5 | 5 µm | 28.9 | 0. 6 | 47.5 | 4.2 | 0.04 | 99.1 | ○ | Recessed | ○ | Recessed | ○ | Smooth |
| Exampl e 7 | I | C/ L | 3 | Irg 907 | 10 | Tnuv in 405 | 5 | 5 µm | 14.97 | 0. 7 | 104.9 | 4.3 | 0. 03 | 99.2 | ○ | Recessed | ○ | Recessed | ○ | Smooth |
| Exampl e 8 | I | C/ L | 3 | Irg 127 | 3 | Tinu vin 405 | 5 | 5 *µ*m | 17.6 | 0. 7 | 45.7 | 3.8 | 0. 03 | 99.3 | ○ | Recessed | ○ | Recessed | ○ | Smooth |
| Example 9 | I | C/ L | 3 | Irg 369 | 3 | Tinu vin PS | 5 | 5 *µ*m | 5.7 | 0. 4 | 124.4 | 5.9 | 0. 05 | 99.2 | ○ | Recessed | ○ | Smooth | ○ | Smooth |
| Example 10 | I | C/ L | 0.5 | Irg 369 | 3 | Tinu vin PS | 5 | 5 *µ*m | 1.6 | 0. 6 | 55.4 | 7.8 | 0. 03 | 99.6 | ○ | Recessed | ○ | Smooth | × | - |
| Example 11 | II | C/ L | 3 | Irg 369 | 3 | Tinu vin PS | 5 | 5 *µm* | 17.3 | 0. 3 | 48.9 | 0.8 | 0. 03 | 96.7 | ○ | Recessed | ○ | Smooth | × | - |
| Example 12 | III | C/ L | 5 | Irg 369 | 3 | Tinu vin PS | 5 | 5 µm | 11.0 | 0. 7 | 84.1 | 2.2 | 0. 04 | 98.3 | ○ | Recessed | ○ | Smooth | × | - |
| Example 13 | III | C/ HX | 5 | Irg 369 | 3 | Tinu vin PS | 5 | 5 µm | 4.8 | 0. 6 | 32.0 | 0.9 | 0. 06 | 92.6 | ○ | Recessed | ○ | Smooth | × | - |
| Comparative Example 1 | III | C/ L | 5 | Irg 369 | 3 | - | - | 5 µm | 77.1 | 0. 4 | 64.9 | 3.8 | 0. 05 | 98.7 | × | - | | | | - |
| Comparative Example 2 | I | C/ L | 5 | Irg 651 | 10 | Tinu vin 405 | 5 | 5 µm | 17.9 | 0. 7 | 4.6 | 4.6 | 0. 08 | 98.2 | ○ | Recessed | ○ | Recessed | × | - |
| Comparative Example 3 | IV | C/ L | 3 | Irg 369 | 3 | Tinu vin 477 | 5 | 5 µm | 6.1 | 0. 5 | 19.8 | 3.6 | 0 . 12 | 96.7 | ○ | Recessed | ○ | Recessed | × | - |
| Compar ative Exampl e 4 | IV | C/ L | 3 | Irg 369 | 3 | Tinu vin PS | 5 | 5 µm | 7.3 | 0. 2 | 19.5 | 3.2 | 0. 13 | 95.9 | ○ | Rece ssed | ○ | Rece ssed | × | - |
| Comparative Example 5 | v | C/ L | 4 | - | - | Tinu vin 477 | 20 | 5 *µ*m | 0.2 | 0. 4 | 8.2 | 3.6 | 3.6 | 0.0 | ○ | Recessed | × | - | | |

As is apparent from Table 1, when the transmittance of the pressure-sensitive adhesive sheet for light having a wavelength of 355 nm is 60% or less, excellent peelability can be exhibited by low-output (0.2 W or less) laser light irradiation. In addition, the pressure-sensitive adhesive sheet of the present invention can express peelability without leaving unevenness (that is, without decomposition of the pressure-sensitive adhesive layer) by adjusting the intensity of laser light to be applied.

### Reference Signs List

**10** pressure-sensitive adhesive layer
**20** base material
**100, 200** pressure-sensitive adhesive sheet

## Claims

1. A pressure-sensitive adhesive sheet, comprising a pressure-sensitive adhesive layer containing a UV absorber and a photopolymerization initiator,
wherein the pressure-sensitive adhesive sheet has a transmittance of 60% or less for light having a wavelength of 355 nm, measured according to the method of the description,
the pressure-sensitive adhesive layer is a layer having an indentation elastic modulus at 23°C of 25 MPa or more after irradiation with UV light having an integrated light quantity of 300 mJ/cm², measured according to the method of the description,
the UV absorber is a benzotriazole-based UV absorber,
the content of the UV absorber is from 1 part by weight to 20 parts by weight with respect to 100 parts by weight of the base polymer in the pressure-sensitive adhesive layer, and
an initial pressure-sensitive adhesive strength A at 23°C immediately after the pressure-sensitive adhesive sheet of the present invention is bonded to a stainless-steel plate is from 0.5 N/20 mm to 10 N/20 mm, measured according to the method of the description.

2. The pressure-sensitive adhesive sheet according to claim 1, wherein the pressure-sensitive adhesive layer is formed of an active energy ray-curable pressure-sensitive adhesive.

3. The pressure-sensitive adhesive sheet according to claim 1 or 2, wherein a molecular weight of a compound forming the UV absorber is 1,000 or less.

4. The pressure-sensitive adhesive sheet according to any one of claims 1 to 3, wherein a pressure-sensitive adhesive strength B at 23°C after the pressure-sensitive adhesive sheet is bonded to a stainless-steel plate and irradiated with UV light having an integrated light quantity of 300 mJ/cm² is 0.2 N/20 mm or less, measured according to the method of the description.

5. The pressure-sensitive adhesive sheet according to any one of claims 1 to 4, wherein a reduction ratio of a pressure-sensitive adhesive strength B at 23°C after the pressure-sensitive adhesive sheet is bonded to a stainless-steel plate and irradiated with UV light having an integrated light quantity of 300 mJ/cm² to an initial pressure-sensitive adhesive strength A at 23°C immediately after the pressure-sensitive adhesive sheet is bonded to the stainless-steel plate is 90% or more.

## Patentansprüche

1. Druckempfindliche Haftmittelbahn, umfassend eine druckempfindliche Haftmittelschicht, enthaltend einen UV-Absorber und einen Photopolymerisationsinitiator,
wobei die druckempfindliche Haftmittelbahn einen Transmissionsgrad von 60% oder weniger für Licht mit einer Wellenlänge von 355 nm, gemessen gemäß dem Verfahren der Beschreibung, aufweist,
die druckempfindliche Haftmittelschicht eine Schicht ist, die nach Bestrahlung mit UV-Licht mit einer integrierten Lichtmenge von 300 mJ/cm² einen Eindringelastizitätsmodul bei 23 °C von 25 MPa oder mehr, gemessen gemäß dem Verfahren der Beschreibung, aufweist,
der UV-Absorber ein auf Benzotriazol basierender UV-Absorber ist,
der Gehalt des UV-Absorbers von 1 Gew.-Teil bis 20 Gew.-Teile bezogen auf 100 Gew.-Teile des Basispolymers in der druckempfindlichen Haftmittelschicht beträgt, und
eine anfängliche druckempfindliche Haftfestigkeit A bei 23 °C unmittelbar nachdem die druckempfindliche Haftmittelbahn der vorliegenden Erfindung an eine Edelstahlplatte geklebt worden ist, gemessen gemäß dem Verfahren der Beschreibung, 0,5 N/20 mm bis 10 N/20 mm beträgt.

2. Druckempfindliche Haftmittelbahn nach Anspruch 1, wobei die druckempfindliche Haftmittelschicht aus einem durch aktive Energiestrahlen härtbaren druckempfindlichen Haftmittel gebildet ist.

3. Druckempfindliche Haftmittelbahn nach Anspruch 1 oder 2, wobei ein Molekulargewicht einer den UV-Absorber bildenden Verbindung 1.000 oder weniger beträgt.

4. Druckempfindliche Haftmittelbahn nach einem der Ansprüche 1 bis 3, wobei eine druckempfindliche Haftfestigkeit B bei 23 °C, nachdem die druckempfindliche Haftmittelbahn an eine Edelstahlplatte geklebt und mit UV-Licht mit einer integrierten Lichtmenge von 300 mJ/cm² bestrahlt worden ist, 0,2 N/20 mm oder weniger, gemessen gemäß dem Verfahren der Beschreibung, beträgt.

5. Druckempfindliche Haftmittelbahn nach einem der Ansprüche 1 bis 4, wobei ein Reduktionsverhältnis einer druckempfindlichen Haftfestigkeit B bei 23 °C, nachdem die druckempfindliche Haftmittelbahn an eine Edelstahlplatte geklebt und mit UV-Licht mit einer integrierten Lichtmenge von 300 mJ/cm² bestrahlt worden ist, zu einer anfänglichen druckempfindlichen Haftfestigkeit A bei 23 °C unmittelbar nachdem die druckempfindliche Haftmittelbahn an die Edelstahlplatte geklebt worden ist, 90 % oder mehr beträgt.

## Revendications

1. Feuille adhésive sensible à la pression, comprenant une couche adhésive sensible à la pression contenant un absorbeur UV et un initiateur de photopolymérisation,
dans laquelle la feuille adhésive sensible à la pression a une transmittance de 60 % ou moins pour de la lumière ayant une longueur d'onde de 355 nm, mesurée conformément au procédé de la description,
la couche adhésive sensible à la pression est une couche ayant un module élastique d'indentation à 23 °C de 25 MPa ou plus après irradiation avec de la lumière UV ayant une quantité de lumière intégrée de 300 mJ/cm², mesuré conformément au procédé de la description,
l'absorbeur UV est un absorbeur UV à base de benzotriazole,
la teneur en l'absorbeur UV va de 1 partie en poids à 20 parties en poids par rapport à 100 parties en poids du polymère de base dans la couche adhésive sensible à la pression, et
une résistance adhésive sensible à la pression initiale A à 23 °C immédiatement après que la feuille adhésive sensible à la pression de la présente invention est assemblée à une plaque en acier inoxydable va de 0,5 N/20 mm à 10 N/20 mm, mesurée conformément au procédé de la description.

2. Feuille adhésive sensible à la pression selon la revendication 1, dans laquelle la couche adhésive sensible à la pression est formée d'un adhésif sensible à la pression durcissable par rayon d'énergie active.

3. Feuille adhésive sensible à la pression selon la revendication 1 ou 2, dans laquelle un poids moléculaire d'un composé formant l'absorbeur UV est de 1000 ou moins.

4. Feuille adhésive sensible à la pression selon l'une quelconque des revendications 1 à 3, dans laquelle une résistance adhésive sensible à la pression B à 23 °C après que la feuille adhésive sensible à la pression est assemblée à une plaque en acier inoxydable et irradiée de lumière UV ayant une quantité de lumière intégrée de 300 mJ/cm² est de 0,2 N/20 mm ou moins, mesurée conformément au procédé de la description.

5. Feuille adhésive sensible à la pression selon l'une quelconque des revendications 1 à 4, dans laquelle un rapport de réduction d'une résistance adhésive sensible à la pression B à 23 °C après que la feuille adhésive sensible à la pression est assemblée à une plaque en acier inoxydable et irradiée de lumière UV ayant une quantité de lumière intégrée de 300 mJ/cm² sur une résistance adhésive sensible à la pression initiale A à 23 °C immédiatement après que la feuille adhésive sensible à la pression est assemblée à la plaque en acier inoxydable est de 90 % ou plus.
